# EUROPEAN PATENT SPECIFICATION

(11) **EP 3 183 728 B1**
(45) Date of publication and mention of the grant of the patent: **13.06.2018**
(21) Application number: 15760330.9
(22) Date of filing: 20.08.2015
(51) Int. Cl.: G06F 17/30, G06F 17/28, G06F 17/27, G10L 15/22

(54) **ORPHANED UTTERANCE DETECTION SYSTEM AND METHOD**
SYSTEM UND VERFAHREN ZUR DETEKTION VERWAISTER ÄUSSERUNGEN
SYSTÈME ET PROCÉDÉ DE DÉTECTION D'ÉNONCÉ ORPHELIN

(30) Priority: 22.08.2014 US 201414466642
(43) Date of publication of application: 28.06.2017
(73) Proprietor: Microsoft Technology Licensing, LLC, Redmond, WA 98052-6399 (US)
(72) Inventor: TUR, Gokhan, Redmond, Washington 98052-6399 (US); DEORAS, Anoop, Redmond, Washington 98052-6399 (US); HAKKANI-TUR, Dilek, Redmond, Washington 98052-6399 (US)
(74) Representative: CMS Cameron McKenna Nabarro Olswang LLP
(86) International application number: PCT/US2015/045978
(87) International publication number: WO 2016/028946

(56) References cited:
- US-A1- 2012 290 290
- US-A1- 2013 080 150
- JUNLAN FENG ET AL: "Speech and Multimodal Interaction in Mobile Search", IEEE SIGNAL PROCESSING MAGAZINE, IEEE SERVICE CENTER, PISCATAWAY, NJ, US, vol. 28, no. 4, 15 June 2011 (2011-06-15), pages 40-49, XP011367628, ISSN: 1053-5888, DOI: 10.1109/MSP.2011.941073

## Description

### BACKGROUND

Smart phones and other devices have made targeted language understanding dialog systems, such as virtual personal assistants, widely available to consumers. Targeted language understanding dialog systems provide a deep understanding of user inputs in a limited number of selected subject matter areas (i.e., task domains). Outside of these task domains, targeted language understanding dialog systems fallback to shallow understanding or generalized techniques to handle the user input. A common fallback is to treat an out-of-domain user input as the object of a general web search.

Users are not always aware of the capabilities and limits of targeted language understanding dialog systems. For example, a virtual personal assistant on a smart phone may be limited to the call, short message service (SMS), email, calendar, alarm, reminder, note, weather, and places task domains allowing the virtual personal assistant to assist users with tasks such as placing calls, sending text messages and emails, setting alarms and reminders, creating notes and calendar entries, and getting information about the weather or places. Because the smart phone is capable of other activities (e.g., playing music), users may assume that the virtual personal assistant can assist with these other activities as well. For example, a user might request that the virtual personal assistant "play a song by Aerosmith" expecting to listen to a selection from the user's music library. Without a music task domain, the user's request is not understood. Instead of hearing the requested music, the user gets a list of web pages. The user may try repeating and/or rephrasing the request not realizing that the virtual personal assistant does not know how to handle music tasks. At the same time, users recognize this fallback behavior of the virtual personal assistant and commonly use simple keywords (e.g., "minimum wage") expecting to obtain the fallback web search results. This is well demonstrated, for example, in the paper "Speech and Multimodal Interaction in Mobile Search" by Junlan Feng et al. published in IEEE Signal Processing Magazine, vol. 28, no. 4, pages 40-49 on 15 June 2011.

From the perspective of the virtual personal assistant, neither the request to play music or the keywords are covered by any of the task domains so they are treated as web search queries; however, the user experience is very different. From the user perspective, getting web search results in response to a request to play music is frustrating because it does not meet user expectations. On the other hand, web search results are satisfactory when that is what the user expects. A technical problem is distinguishing between requests addressed to, but not covered by any of the task domains of, a targeted language understanding dialog system that are intended to achieve a result other than returning web search results and web search queries where a web search is appropriate. It is with respect to these and other considerations that the present invention has been made. Although relatively specific problems have been discussed, it should be understood that the aspects disclosed herein should not be limited to solving the specific problems identified in the background.

### BRIEF SUMMARY

This summary is provided to introduce a selection of concepts in a simplified form that are further described below in the Detailed Description section. This summary is not intended to identify key features or essential features of the claimed subject matter, nor is it intended to be used as an aid in determining the scope of the claimed subject matter.

Aspects of an orphaned utterance detection system and accompanying method include an orphan detector that processes out-of-domain utterances from a targeted language understanding dialog system to determine whether the out-of-domain utterance expresses a specific intent to have the targeted language understanding dialog system to take a certain action where fallback processing, such as performing a generic web search, is unlikely to be satisfied by web searches. The dialog system incorporating the orphan detector receives one or more utterances for processing. Utterances as being in-domain or out-of-domain based on whether the utterance is covered by any of the task domains of the targeted understanding component using a domain classifier. Features are extracted from utterances for use in classifying and understanding the utterances. Feature extraction may include one or more of a lexical parsing operation, a part-of-speech tagging operation, a syntactic parsing operation, and a semantic parsing operation.

An orphan determination identifies whether or not an out-of-domain utterance is an orphan based on the extracted features. One lexical feature used is simply word n-grams from the utterance. Because the orphan detector relies more on structure than content, syntactic features may also be used by the orphan classifier. The baseline syntactic feature for use in orphan determination is part-of-speech tag n-grams. Semantic features are also useful in an orphan classifier model. Checking for the existence of a predicate and a set of arguments offers one semantic features for high precision orphan classification. Orphans are not treated the same as general web search queries. This provides an improved user experience. The user experience is improved, not because the dialog system is able satisfy the user's request, but because the dialog system provides a meaningful response even when the user's request cannot be satisfied.

### BRIEF DESCRIPTION OF THE DRAWINGS

Further features, aspects, and advantages of the present disclosure will become better understood by reference to the following figures, wherein elements are not to scale so as to more clearly show the details and wherein like reference numbers indicate like elements throughout the several views:
Figure 1 is a system diagram illustrating aspects of a targeted language understanding dialog system utilizing the orphan detector;
Figure 2 is a high level flowchart illustrating aspects of a method for detecting and handling orphans;
Figure 3 illustrates an example of constituency-based syntactic structure parsing;
Figure 4 illustrates an example of semantic parsing applied to the sentence syntactically parsed in Figure 3;
Figure 5 is a high level flowchart illustrating aspects of a method for unsupervised training of a semantic models for a new (i.e., uncovered) task domain using orphans in an offline usage scenario;
Figure 6 is a block diagram illustrating physical components of a computing device suitable for practicing aspects of the present invention;
Figure 7A illustrates a mobile computing device suitable for practicing aspects of the present invention;
Figure 7B is a block diagram illustrating an architecture for a mobile computing device suitable for practicing aspects of the present invention; and
Figure 8 is a simplified block diagram of a distributed computing system with which aspects of the present invention may be practiced.

### DETAILED DESCRIPTION

According to present invention, a method of classifying an out-of-domain utterance, as set forth in appended claim 1, a target language understanding dialog system, as set forth in appended claim 7, and a computer readable medium containing computer executable instructions, as set forth in appended claim 14, are provided. Various aspects of the present invention are described more fully below with reference to the accompanying drawings, which form a part hereof, and which show specific exemplary aspects of the present invention. However, the present invention may be implemented in many different forms and should not be construed as limited to the aspects set forth herein; rather, these aspects are provided so that this disclosure will be thorough and complete, and will fully convey the scope of the various aspects to those skilled in the art. Aspects may be practiced as methods, systems, or devices. Accordingly, implementations may be practiced using hardware, software, or a combination of hardware and software. The following detailed description is, therefore, not to be taken in a limiting sense.

Aspects of an orphan detector and accompanying method are described herein and illustrated in the accompanying figures. The orphan detector processes out-of-domain utterances from a targeted language understanding dialog system to determine whether the out-of-domain utterance expresses a specific intent to have the targeted language understanding dialog system to take a certain action where fallback processing, such as performing a generic web search, is unlikely to be satisfied by web searches. Such utterances are referred to as orphans because they are not appropriately handled by any of the task domains or fallback processing. The orphan detector distinguishes orphans from web search queries and other out-of-domain utterances by focusing primarily on the structure of the utterance rather than the content. Orphans detected by the orphan detector may be used both online and offline to improve user experiences with targeted language understanding dialog systems. The orphan detector may also be used to mine structurally similar queries or sentences from the web search engine query logs.

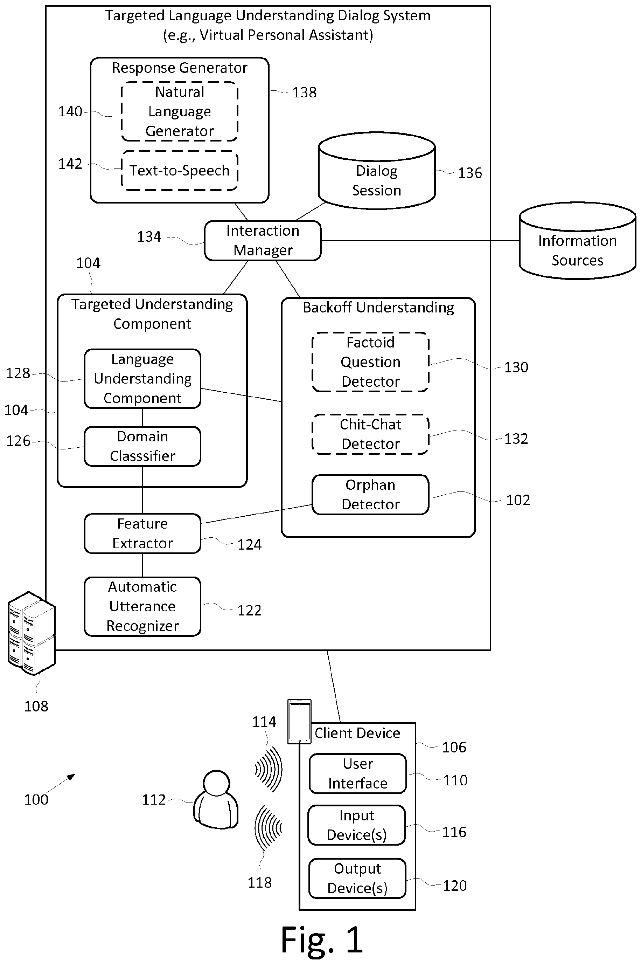

Figure 1 is a system diagram illustrating aspects of a targeted language understanding dialog system utilizing the orphan detector. The dialog system **100** includes the orphan detector **102** and a targeted understanding component **104**. The dialog system may be implemented in a local architecture using a single computing device or a distributed architecture, as illustrated, using one or more computing devices, such as, without limitation, a client device **106** in communication with a server **108**. The client device **106** and the server **108** may be implemented using various computing devices including, but not limited to, server or desktop computers, laptops, tablet computers, smartphones, smart watches, and smart appliances. Distributed components may be in communication via a network, such as, but not limited to, a local area network, a wide area network, or the Internet.

The dialog system **100** provides a user interface **110** for interacting with a user **112** through a wide variety of input and output modalities. The types and number of input and output modalities is dependent upon the hardware of the client device **106**. Examples of suitable input and output modalities include, without limitation, speech, text, handwriting, touch, and gesture. The client device **106** accepts conversational inputs **114** from the user **112** via one or more input devices **116** and renders conversational outputs **118** for consumption by the user **112** via one or more output devices **120**. Examples of suitable input devices include, without limitation, microphones, touch screens, cameras or scanners, physical keyboards or keypads, virtual keyboards or keypads. Examples of suitable output devices include, without limitation, speakers, display screens, and projectors.

To provide context by way of an example, aspects of the dialog system **100** may be described as a multi-modal virtual personal assistant (VPA) responsive to utterances from a user. However, the orphan detector **102** may be used in conjunction with a wide variety of targeted language understanding dialog systems, and should not be limited to use with a virtual personal assistant. As used herein for convenience, the term "utterance" refers to any conversational input to the dialog system **100**, regardless of mode. References to or depictions of any specific modality or conversational inputs should be read broadly to encompass other modalities or conversational inputs along with the corresponding hardware and/or software modifications to implement other modalities.

If accepting non-text utterances, the dialog system **100** may include one or more automatic utterance recognizers **122** that convert utterances that are not in a computer readable format into a computer readable format for processing using an appropriate decoding technique for the input type. Examples of suitable automatic utterance recognizers **122** include, without limitation, speech recognizers, gesture recognizers, optical character recognizers, and handwriting recognizers. The output of the automatic utterance recognizer **122** feeds the targeted understanding component **104**.

A feature extractor **124** extracts features from the output of the automatic utterance recognizer **122**. Features may be extracted for use by the orphan detector **102** and/or the targeted understanding component **104**. The types of features extracted for the orphan detector **102** include lexical features, part-of-speech tag features, syntactic features, and semantic features.

The targeted understanding component **104** includes a domain classifier **126** and a language understanding component **128**. The domain classifier **126** attempts to map utterances to one or more supported task domains using one or more domain models. Utterances covered by the one of the supported task domains are "in-domain." Utterances covered by the one of the supported task domains are "out-of-domain." The language understanding component **128** convert the utterances into a meaning representation by disassembling and parsing the computer readable text into semantic representations that may be processed by the dialog system. In most multi-domain dialog systems, targeted semantic processing is performed task domain by task domain using domain models specific to each task domain instead of using a global grammar or statistical model for all task domains. Using targeted understanding enables system designers to focus on the capabilities of the dialog system and provide deep understanding of in-domain utterances.

Out-of-domain utterances are handled through backoff understanding. As previously mentioned, a typical example of backoff understanding employed by targeted language understanding dialog systems is to treat utterances that are rejected by all domain classifiers as generic web search queries. Backoff understanding in virtual personal assistants and other targeted language understanding dialog systems may also include a factoid question detector **130** and/or a chit-chat detector **132**.

A factoid question is a question seeking simple facts about a named entity. Factoid questions are often phrased as who, what, when, where, why, or how questions. An example of a factoid question is "what is the tallest mountain in the United States?"

Chit-chat refers to casual utterances in the nature of small talk. With a virtual personal assistant, chit-chat typically involves inquiries of a semi-silly or semi-personal nature. The virtual personal assistant may be provided with responses to such inquiries to make the virtual personal assistant seem, at least, somewhat human. Examples of chit-chat include utterances such as "where are you from" or "tell me a joke." Essentially, chit-chat involves non-productive interactions that help define the personality of a virtual personal assistant or other targeted language understanding dialog system.

The orphan detector **102** improves backoff understanding by detecting orphans. As used herein, an orphan refers to a request having a non-factoid, unambiguous, and specific intent that is known not to be covered by any of the task domains of the targeted language understanding dialog system (i.e., an out-of-domain utterance). Orphans, therefore, represent requests that could be covered by the targeted language understanding dialog system with an appropriate task domain and, in most cases, cannot be fulfilled by performing a generic web search.

In an online system providing contemporaneous responses to user utterances, such as the virtual personal assistant, the orphan detector **102** allows the dialog system **100** to intelligently respond to orphans in an appropriate manner that improves the specific user experience. For example, the information provided by the orphan detector **102** may be used online to avoid returning an unresponsive generic web search when the user utterance is an orphan and to suggest an appropriate response. In offline use, the orphan detector **102** provides valuable information for improving the functionality of the targeted understanding component **104** and, thereby, improving the general user experience with the dialog system **100**. For example, the orphan detector **102** may be used offline to rapidly add new task domains and expand the capabilities of the targeted language understanding dialog system or improve existing domain models to handle orphans.

A discriminative classifier is well suited for use in the orphan detector because discriminative classifiers tend to be less sensitive to the prior probability distribution compared to generative classifiers (e.g., Naive Bayes). One example of a suitable discriminative classifier is a support vector machine (SVM). Support vector machines typically outperform other binary classification methods for tasks with large features spaces. The orphan detection feature space is very large as it includes all of the word and part-of-speech tag *n*-grams.

Orphan detector classifier models may be built using training data including a set of frequently occurring web search queries and a set of utterances addressed to the dialog system from an dialog corpus. The set of web search queries provides a negative training class while the set of utterances addressed to the dialog system provides a positive training class. The utterances from the set of dialog system-addressed utterances may be manually annotated. The set of dialog system-addressed utterances may include in-domain utterances and/or out-of-domain utterances that are determined to be addressed to the dialog system. Depending upon the feature sets used in orphan detection models, the orphan detector may employ one or more of the following: a lexical parser, a part-of-speech tagger, a syntactic parser, and a semantic parser.

An interaction manager **134** acts on the output of the targeted understanding component **104**. The interaction manager **134** is a stateful component of the dialog system that is ultimately responsible for the flow of the dialog (i.e., conversation). The interaction manager **134** keeps track of the conversation by updating the dialog session **136** to reflect the current dialog state, controls the flow of the conversation. The dialog session **136** is a data set that may store any and all aspects of the interaction between the user and the dialog system. The types and amount of dialog state information stored by the dialog session may vary based on the design and complexity of the dialog system. For example, basic dialog state information stored by most dialog systems includes, but is not limited to, the utterance history, the last command from the user, and the last machine action, and the current dialog state. The interaction manager **134** performs appropriate machine actions based on the current dialog state, such as, but not limited to, retrieving information from structured or unstructured information sources (e.g., knowledge bases, contact lists, etc.)

A response generator **138** generates the response of the dialog system. The response generator **138** may include a natural language generation component **140** that converts the response into natural (i.e., human) sounding text for presentation to the users. The response generator **138** may also include a text-to-speech component **142** that translates the response into speech and allows the dialog system to verbally interact with the users. The response is rendered via one or more of the output devices of the client device.

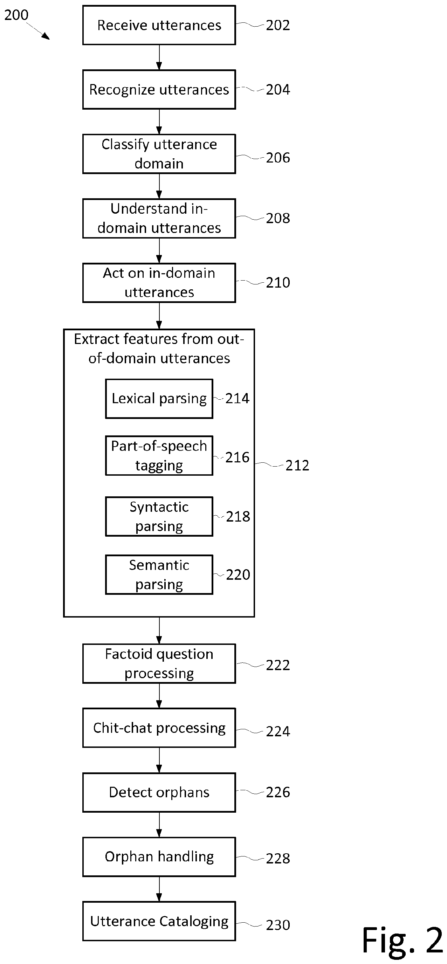

Figure 2 is a high level flowchart illustrating aspects of a method for detecting and handling orphans. The method **200** may include an input operation **202** where the dialog system receives one or more inputs for processing. In an online usage scenario, the inputs are typically individual utterances received in real time from a user. If necessary, a recognition operation **204** converts the utterance into a format that is usable by the orphan detector **102**. For example, the recognition operation **204** may involve applying speech recognition to a spoken utterance to decode the speech into text. In an offline usage scenario, the inputs may be from an existing corpus of utterances or queries from a large number of users of a dialog system or web search engine query logs.

A domain classification operation **206** classifies utterances as being in-domain or out-of-domain based on whether the utterance is covered by any of the task domains of the targeted understanding component **104**. The domain classification operation **206** may use an "acceptance" approach, in which each domain has an associated classifier that determines whether the utterance belongs to that domain, a "triage" approach, in which a top level classifier determines the domain for the utterance, or a combination of these approaches.

While domain classification is typically expressed in terms of inclusion (i.e., detecting utterances covered by a defined task domain), aspects of the invention focus on handling of out-of-domain utterances. Accordingly, reference may be made to detection and/or classification of out-of-domain utterances in the description and/or the appended claims. A determination that an utterance is an out-of-domain utterance may be accomplished simply by negation of the result obtained by testing the utterance for inclusion in the domains of the targeted language understanding dialog system. In other words, an utterance that does not meet the inclusion criteria for any domain of the targeted language understanding dialog system has been determined to be an out-of-domain utterance.

Following the domain classification operation **206**, an in-domain utterance understanding operation **208** and an in-domain utterance action operation **210** are performed. The in-domain utterance understanding operation **208** determines the intent (i.e., meaning) of the in-domain utterance. Aspects of assigning meaning by the in-domain understanding operation **208** may include, without limitation, argument extraction, slot-filling, and other semantic processing functions and approaches.

The in-domain utterance action operation **210** performs the dialog act determined to achieve the intent of the in-domain utterance based on the current dialog state. For example, the in-domain utterance action operation **210** may interface with an alarm application to set an alarm for the day and time specified in the arguments or a phone application to place a call to the person specified in the arguments. The domain-specific rules or instructions for handling of in-domain utterances are typically specified as part of the task domain definitions.

Generally, in-domain utterance interactions are tailored to the application, environment, and device being used. In-domain tasks for a smart television, cable box, or internet television device or application may include playing streaming video content, changing channels, and adjusting volume. For example, on a general purpose computing device, in-domain tasks for a virtual personal assistant may include managing reminders, managing alarms, making flight reservations, and making hotel reservations. On a smart phone, in-domain tasks for the virtual personal assistant may be expanded to sending text messages and placing calls via a cellular carrier network.

A feature extraction operation **212** extracts features used to classify and understand utterances. Feature extraction may include one or more of a lexical parsing operation **214**, a part-of-speech tagging operation **216**, a syntactic parsing operation **218**, and a semantic parsing operation **220**. Feature extraction may also be used to extract features useful for classifying out-of-domain utterances as chit-chat or factoid questions and for classifying in-domain utterances. Feature extraction for in-domain utterances and out-of-domain utterances may occur separately or in a combined operation occurring prior to the domain classification operation **204**.

The method **200** may optionally include a factoid question processing operation **222** and/or a chit-chat processing operation **224** to detect and process the corresponding out-of-domain utterances.

An orphan determination **226** identifies whether or not an out-of-domain utterance is an orphan. Detecting orphans is a surprisingly difficult task. The orphan determination **226** focuses on how the intent of the utterance is expressed (i.e., the structure of the utterance) rather than understanding the specific intent of the utterance (i.e., the content of the utterance). For example, an out-of-domain utterance structured as a command (e.g., "send email to mom") is more likely to be a request for the dialog system to perform a specific, but unsupported, action rather than to be keywords for a generic web search. Similarly, an utterance containing only a named entity or a noun phrase and nothing else (e.g., hotel) is more likely to be a keyword addressed to the web search, although some instances may be ambiguous (e.g., "hotel reservation").

Confidence scores from domain classifiers for known task domains are not particularly useful because the inputs to the orphan determination **226** are out-of-domain utterances that were rejected by the covered task domains.

The linear kernel SVM classification task can be formally defined as follows: Given training data, *D*, compiled using features extracted from samples of utterances addressed to a targeted language understanding dialog system (e.g., VPA-addressed requests), *VPA* = {(*x*₁,-1),...,(*xₘ*,-1)}, and samples of web search queries, *Q* = {(*xₙ*,1),...,(*x*ₘ₊₁,1)}, a linear kernel SVM classification task can be formally defined as finding the hyperplane, *ω̅* · *x̅* - *b* = 0, dividing these classes with the maximum margin.

One lexical feature is simply word n-grams from the utterance. Training an orphan classifier using utterances covering multiple domains effectively reduces the impact of domain-specific words (i.e., "cuisine" or "meal" in the restaurant domain) relative to domain-independent phrases (e.g., "could you please show me" or "what is the"). Lexical models are suitable for distinguishing orphans from web search queries even though there is little lexical overlap with the content words because in-domain indicator phrases (e.g., "can you" or "please") serve as good orphan classification features. The results obtained using an orphan classifier trained using only lexical features provides a non-trivial baseline for comparison. Table 1 compares the relative frequency of the first person words appearing in VPA-addressed requests and web search queries.

**TABLE 1**

| Relative Frequency of First Person Words in Virtual Personal Assistant Requests and Web Search Queries | | |
|---|---|---|
| Word | VPA | Web Search |
| me | 0.69 % | 0.01 % |
| i | 0.45 % | 0.04 % |
| my | 0.34 % | 0.04 % |

Because the orphan detector relies more on structure than content, syntactic features may also be used by the orphan classifier. The baseline syntactic feature for use in orphan determination is part-of-speech tag *n*-grams. Certain parts-of-speech appearing as the first word in an utterance provide a good indicator as to whether or not the utterance is an orphan. For example, the utterance is more likely to be an orphan when the part-of-speech of the first word is a modal (e.g., "could") or a base form verb (e.g., play) than when the part-of-speech of the first word is a proper noun. Similarly, other parts-of-speech that are good indicators the utterance is likely to be an orphan include base personal pronouns (e.g., "I") or genitive personal pronouns (e.g., "my") appearing as the first word of the utterance.

Table 2 compares the relative frequency of the most frequent part-of-speech tags for the first word appearing in VPA-addressed requests and web search queries. As can be seen, a request is significantly more likely than a web search query to have a verb as the first word of the utterance.

**TABLE 2**

| Relative Frequency of Top Part-of-Speech Tags for First Word in Virtual Personal Assistant Requests and Web Search Queries | | |
|---|---|---|
| Part-of-Speech Tag | VPA | Web Search |
| VB (verb) | 31.21 % | 3.01 % |
| NNP (plural noun) | 13.42 % | 54.27 % |
| NN (singular noun) | 5.72 % | 7.48 % |
| WP (Wh-pronoun) | 4.34 % | 1.57 % |
| WRB (Wh-adverb) | 3.42 % | 2.47 % |
| PRP (personal pronoun) | 2.89 % | 0.37 % |
| JJ (adjective) | 1.85 % | 8.66 % |

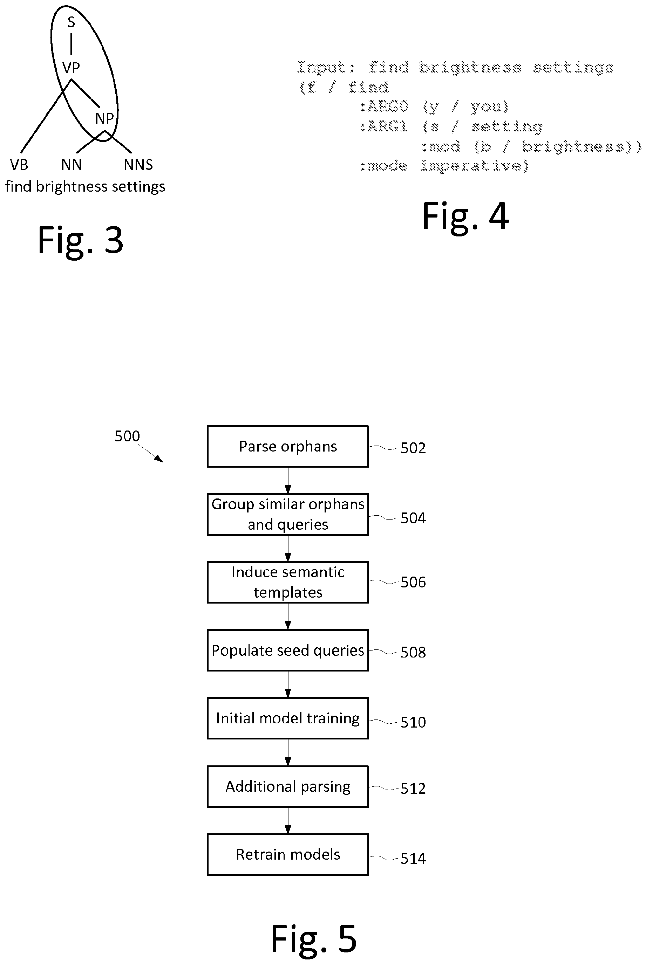

Figure 3 illustrates an example of constituency-based syntactic structure parsing. The words "find brightness settings" form a sentence (S) composed of a verb phrase (VP) and a noun phrase (NP). The noun phrase is composed of the singular noun (NN) "brightness" coupled with the plural noun (NNS) "settings." The verb phrase is composed of the verb (VB) "find" with the noun phrase "brightness settings" serving as its object. The structure of the syntactic parse tree may be expressed as the syntactic shape feature, S(VP(NP)), which is one of the most frequent shapes of VPA-addressed requests. The syntactic parse tree shape is another syntactic feature useful in an orphan classifier model. In practice, significantly more syntactic parse tree shapes appear in VPA-addressed requests than in web search queries. The large number of syntactic parse tree shapes for VPA-addressed requests makes syntactic parse tree shape more useful for recall rather than precision.

Semantic features are also useful in an orphan classifier model. Although not required, a typical semantic frame for an in-domain utterance includes the intent, which is commonly in the shape of predicate/argument (e.g., "make/reservation," "buy/ticket," or "set/alarm"). Checking for the existence of a predicate and a set of arguments offers one semantic feature for high precision orphan classification.

Semantic parsing may be accomplished using a generic knowledge-based semantic parser (e.g., NLPWin). Because most of the utterances evaluated using the orphan detector are very short and simple to parse, semantic parsing may also be accomplished using shallow semantic parsers (e.g., PropBank) or deep semantic parser (e.g., FrameNet) even though such parsers are typically not particularly robust when it comes to parsing natural spoken language.

Figure 4 illustrates an example of semantic parsing applied to the sentence syntactically parsed in Figure 3. The illustrated semantic parse tree uses abstract meaning representation (AMR) format where "ARG0" is usually the subject, "ARG1" is the direct object, "mod" is a modifier, and "mode" shows the dialog act of a sentence (e.g., imperative, interrogative, or exclamation) that is not a regular statement. The structure of the semantic parse may be expressed as the semantic shape feature, *Pred(Arg0, Arg1, mode:imperative)*, which is the most frequent semantic shape for VPA-addressed requests. Conversely, the semantic shape of a stand-alone concept (e.g., "facebook"), appears approximately 16 times more frequently in web search queries than in VPA-addressed requests.

Orphan classifier models may be combined at the feature level or the decision level. In other words, a single orphan classifier model may be trained using multiple feature sets providing a single output on which to base the orphan classification decision or individual orphan classifier models may be trained using each feature set providing a set of outputs to evaluate when making the orphan classification decision.

The orphan detector determines whether an utterance rejected by the domain models is an orphan or a web search query and returns the orphans for processing. How the orphans are processed may vary depending upon whether the orphan detector is being used in an online or offline scenario.

Returning now to Figure 2, an orphan handling operation **228** handles orphans identified by the orphan determination **226** in an appropriate manner to provide an improved user experience. For example, the orphan handling operation **228** may avoid submitting the orphan to a generic web search query or suppress reporting of generic web results for orphan. Instead, the orphan handling operation **228** may generate a message stating the dialog system understands that the user made a specific action request, but that feature is not currently supported by the dialog system. In a less assuming approach, the orphan handling operation **228** may provide generic web search results based on the orphan together with a message letting the user know that the dialog system understands that the orphan appears to be an unsupported action request and, because the request cannot be fulfilled, the search results are being provided just in case the user actually meant to perform a generic web search. Aspects of the orphan handling operation **228** may include using a confidence score produced by the orphan determination **226** to decide how to handle the orphan. The orphan handling operation **228** may alternatively, or additionally, provide the user with the opportunity to teach the dialog system how to perform an unsupported action.

The user experience is improved, not because the dialog system is able satisfy the user's request, but because the dialog system provides a meaningful response even when the user's request cannot be satisfied. The user is not left wondering why the dialog system provided a nonsensical response (i.e., web search query results) rather than doing what the user asked, which, in turn, generally reduces user frustration with the dialog system.

An utterance cataloging operation **230** may store utterances received by the dialog system along with the classifications assigned by the dialog system. The utterance cataloging operation **230** may be used to store all utterances received by the dialog system or only selected classes of utterances (e.g., without limitation, in-domain, out-of-domain, orphans, web search queries, chit-chat, or factoid questions) and combinations thereof. For example, the utterance cataloging operation **230** may store only those utterances classified as out-of-domain. In another example, only orphans and web search queries may be stored.

Depending upon the types and classes of inputs received, some or all of the operations may be omitted in an offline scenario. For example, the corpus may only include out-of-domain utterances to be analyzed or a filter applied to the corpus making steps such as domain classification unnecessary. Similarly, a corpus or log will be stored as text and not require a recognition operation. Additionally, actual handling of utterances is generally unnecessary for purposes of offline analysis.

Figure 5 is a high level flowchart illustrating aspects of a method for unsupervised training of a semantic models for a new (i.e., uncovered) task domain using orphans in an offline usage scenario. The method **500** begins by performing a generic parsing operation **502** on the orphans detected by the orphan detector. A query grouping operation **504** groups similar orphans and web search queries using the results of generic parsing operation **502** and knowledge from web search engines. Examples of useful groupings include, without limitation, groupings based on sharing the same predicate and argument types (e.g., "play madonna" and "play some adele"), sharing the same argument type (e.g., "show me delta stock" and "how is united doing today"), or sharing the same main argument (e.g., "recipe of a Mediterranean dish" and "I need the recipe of Tiramisu"). A semantic templating operation **506** induces a semantic template, which, for example, may be based on AMR parse shapes. A query seeding operation **508** populates seed queries using semantic clustering (e.g., Latent Dirichlet allocation). A training operation **510** trains domain detection and slot filling models using the seed queries. An additional parsing operation **512** uses the resulting model to automatically parse the remaining queries. A retaining operation **514** retains the semantic models using the results of the additional parsing operation **512**.

To put the benefits of orphan detection in perspective, analysis of a dialog corpus containing approximately one million utterances from one virtual personal assistant system showed that a majority of the utterances were not classified as belonging to one of the nine atomic domains (alarm, calendar, note, call, short message service, reminder, email, weather, and places) handled by a virtual personal assistant. Only 30 % of the utterances were in-domain (i.e., belonged to one of the nine domains). Another 5 % of the utterances could not be processed (e.g., were unintelligible). The remaining 65 % of were out-of-domain utterances, which includes factoid questions, chit-chat, web search queries, and orphans.

Taking a closer look at the distribution of out-of-domain utterances showed that orphans accounted for approximately 18 % of the utterances. Web search queries accounted for another 23 % of the utterances. Factoid questions and chit-chat combined rounded out the remaining 24 % of the utterances.

For n-fold cross-validation testing, the orphan detector classifier models were built from training data including approximately 100,000 web search queries picked from head and mid-frequency queries without regard to frequency and approximately 120,000 VPA-addressed requests from an existing virtual personal assistant dialog corpus. The web search queries formed the negative training class, and the VPA-addressed requests formed the positive training class. To evaluate the relative performance of orphan classifier models based on individual feature sets (i.e., lexical, part-of-speech tags, syntactic parse, and semantic parse), in-domain utterances for all but one of seven known task domains were used when training the orphan classifier models. The omitted task domain served provided a known set of utterances that should be classified as orphans and should not be picked up by any of the other task domains.

Two primary success measures for the orphan detector are precision and recall. Precision represents the fraction of the orphans that are correctly identified by the orphan detector out of the total number of orphans identified by the orphan detector. Recall represents the number of orphans that are correctly identified by the orphan detector out of the total number of out-of-domain utterances processed by the orphan detector. In testing, the lexical, part-of-speech tag, syntactic parse, and semantic parse models exhibited average recalls greater than 80 %, but the precision varied.

Individually, the lexical, part-of-speech tag, syntactic parse, and semantic parse models all exhibit average recalls greater than 80 %, but the precision of the results varies. Table 3 shows the relative precision of orphan classifier models trained using each of the available feature sets. The precision of syntactic models tends to be reduced because factoid questions (e.g., "can you paint wood frame homes in winter") and VPA-addressed requests (e.g., "can you tell me a joke") often share the same syntactic structure. Distinguishing between factoid questions and VPA-addressed requests is a nontrivial semantic disambiguation task.

**TABLE 3**

| Representative Precision of Orphan Classifier | | | |
|---|---|---|---|
| Feature Set | Factoid | In-Domain | Out-of-Domain |
| Lexical | 6 % | 50 % | 0 % |
| Part-of-Speech Tags | 17 % | 11 % | 4 % |
| Syntactic Parse | 48 % | 14 % | 11 % |
| Semantic Parse | 22 % | 4 % | 12 % |

Table 4 shows representative utterances detected from a known task domain that was omitted when training the orphan classifier model. Lexical and part-of-speech tag models tend to return longer utterances with specific key phrases (e.g., "can you please show me...") compared to syntactic and semantic parsing models.

**TABLE 4**

| Representative Sentences Detected by Orphan Classifier from Omitted Domain (Alarm) | |
|---|---|
| Feature Set | Sentence Detected |
| Lexical | "I need to get up an hour earlier tomorrow morning can you change the alarm this is going to happen every week" |
| | "set an alarm for tomorrow at 12:15 so I don't forget to get the kids in the car in time for the doctor appointment" |
| Part-of-Speech Tags | "I have to go to work 30 minutes early tomorrow, set my alarm to 30 minutes early" |
| | |
| | "create an alarm for weekdays to wake me up at 5 am" |
| Syntactic Parse | "wake me up at three o'clock" |
| | |
| | "what time do I need to wake up next week" |
| Semantic Parse | "set alarm for seven a.m." |
| | |
| | "I no longer wish to hear the alarm" |

Aspects of the invention may be practiced as systems, devices, and other articles of manufacture or as methods using hardware, software, computer readable media, or combinations thereof. The following discussion and associated figures describe selected system architectures and computing devices representing the vast number of system architectures and computing devices that may be utilized for practicing aspects of the invention described herein and should not be used to limit the scope of the invention in any way.

User interfaces and information of various types may be displayed via on-board computing device displays or via remote display units associated with one or more computing devices. For example, user interfaces and information of various types may be displayed and interacted with on a wall surface onto which user interfaces and information of various types are projected. Interaction with the multitude of computing systems with which the invention may be practiced may be accomplished by, without limitation, keystroke entry, touch screen entry, voice or other audio entry, gesture entry where an associated computing device is equipped with detection (e.g., camera) functionality for capturing and interpreting user gestures for controlling the functionality of the computing device, and the like.

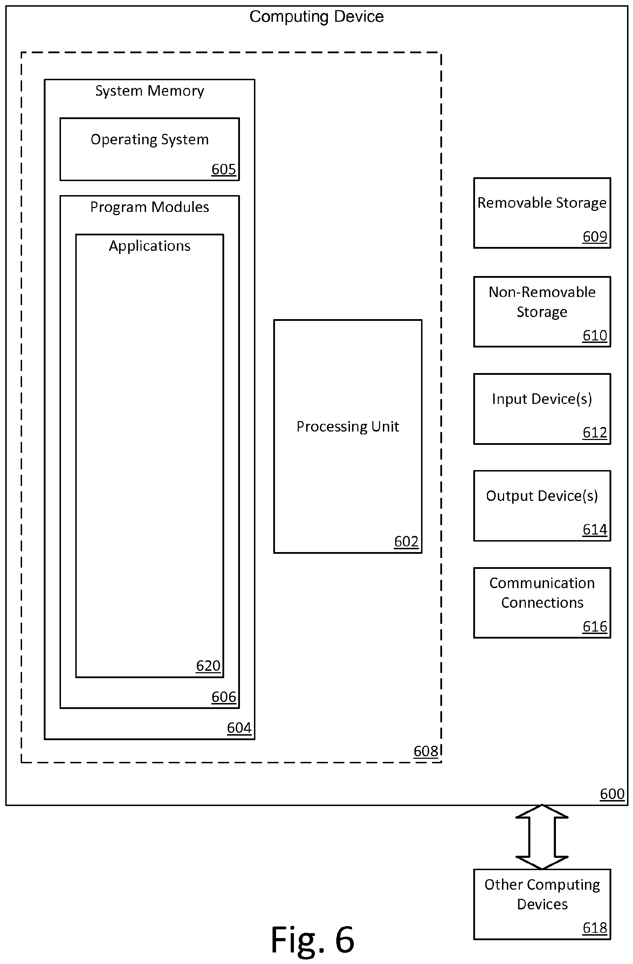

Figure 6 is a block diagram illustrating an architecture for a computing device with which aspects of the invention may be practiced. The computing device **600** is suitable to implement aspects of the invention embodied in a wide variety of computers and programmable consumer electronic devices including, but not limited to, mainframe computers, minicomputers, servers, personal computers (e.g., desktop and laptop computers), tablet computers, netbooks, smart phones, smartwatches, video game systems, and smart televisions, and smart consumer electronic devices.

In a basic configuration, indicated by dashed line **608**, the computing device **600** may include at least one processing unit **602** and a system memory **604**. Depending on the configuration and type of computing device, the system memory **604** may comprise, but is not limited to, volatile storage (e.g., random access memory), non-volatile storage (e.g., read-only memory), flash memory, or any combination of such memories. The system memory **604** may include an operating system **605** suitable for controlling the operation of the computing device **600** and one or more program modules **606** suitable for running software applications **620**, including software implementing aspects of the invention described herein.

While executing on the processing unit **602,** the software applications **620** may perform processes including, but not limited to, one or more of the stages of methods **200** and 5**00**. Other program modules that may be used in accordance with aspects of the invention may include electronic mail and contacts applications, word processing applications, spreadsheet applications, database applications, slide presentation applications, or computer-aided drawing application programs, etc.

In addition to the basic configuration, the computing device **600** may have additional features or functionality. For example, the computing device **600** may also include additional data storage devices (removable and/or non-removable) such as, for example, magnetic disks, optical disks, or tape. Such additional storage is illustrated by a removable storage device **609** and a non-removable storage device **610**.

The computing device **600** may also have one or more input device(s) **612** such as a keyboard, a mouse, a pen, a sound input device, a touch input device, etc. The output device(s) **614** such as a display, speakers, a printer, etc. may also be included. The aforementioned devices are examples and others may be used. The computing device **600** may include one or more communication connections **616** allowing communications with other computing devices **618**. Examples of suitable communication connections **616** include, but are not limited to, RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory **604**, the removable storage device **609**, and the non-removable storage device **610** are all examples of computer storage media (i.e., memory storage). Computer storage media may include random access memory (RAM), read only memory (ROM), electrically erasable programmable read-only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other article of manufacture which can be used to store information and which can be accessed by the computing device **600**. Any such computer storage media may be part of the computing device **600**.

Aspects of the invention may be practiced in an electrical circuit comprising discrete electronic elements, packaged or integrated electronic chips containing logic gates, a circuit utilizing a microprocessor, or on a single chip containing electronic elements or microprocessors. For example, aspects of the invention may be practiced via a system-on-a-chip (SOC) where each or many of the illustrated components may be integrated onto a single integrated circuit. Such a SOC device may include one or more processing units, graphics units, communications units, system virtualization units and various application functionality all of which are integrated (or "burned") onto the chip substrate as a single integrated circuit. When operating via a SOC, the functionality described herein with respect to the software applications **620** may be operated via application-specific logic integrated with other components of the computing device **600** on the single integrated circuit (chip). Aspects of the invention may also be practiced using other technologies capable of performing logical operations such as, for example, AND, OR, and NOT, including but not limited to mechanical, optical, fluidic, and quantum technologies. In addition, aspects of the invention may be practiced within a general purpose computer or in any other circuits or systems.

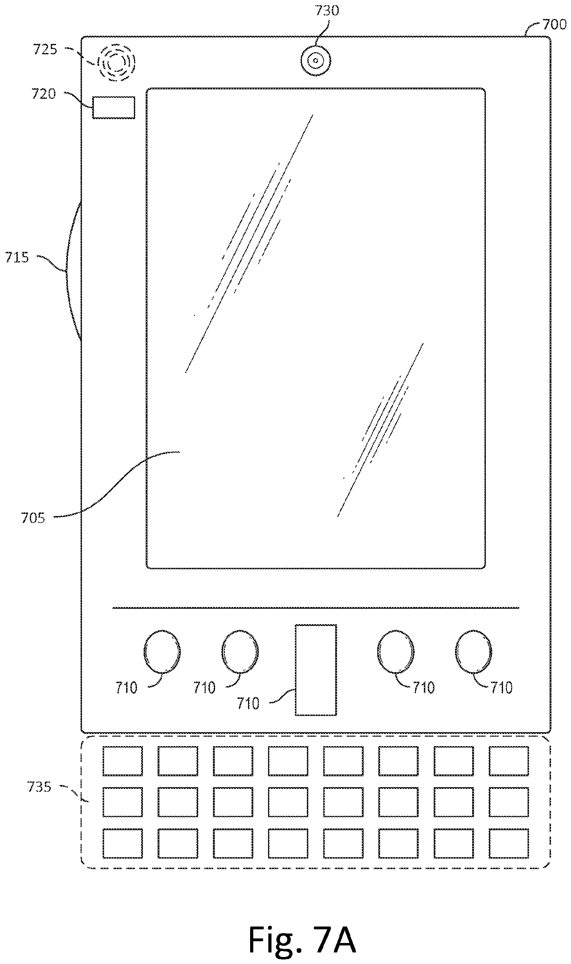

Figure 7A illustrates a mobile computing device **700** suitable for practicing aspects of the present invention. Examples of suitable mobile computing devices include, but are not limited to, a mobile telephone, a smart phone, a tablet computer, a surface computer, and a laptop computer. In a basic configuration, the mobile computing device **700** is a handheld computer having both input elements and output elements. The mobile computing device **700** typically includes a display **705** and one or more input buttons **710** that allow the user to enter information into the mobile computing device **700**. The display **705** of the mobile computing device **700** may also function as an input device (e.g., a touch screen display). If included, an optional side input element **715** allows further user input. The side input element **715** may be a rotary switch, a button, or any other type of manual input element. The mobile computing device **700** may incorporate more or fewer input elements. For example, the display **705** need not be a touch screen. The mobile computing device **700** may also include an optional keypad **735**. Optional keypad **735** may be a physical keypad or a "soft" keypad generated on the touch screen display. The output elements include the display **705** for showing a graphical user interface, a visual indicator **720** (e.g., a light emitting diode), and/or an audio transducer **725** (e.g., a speaker). The mobile computing device **700** may incorporate a vibration transducer for providing the user with tactile feedback. The mobile computing device **700** may incorporate input and/or output ports, such as an audio input (e.g., a microphone jack), an audio output (e.g., a headphone jack), and a video output (e.g., a HDMI port) for sending signals to or receiving signals from an external device.

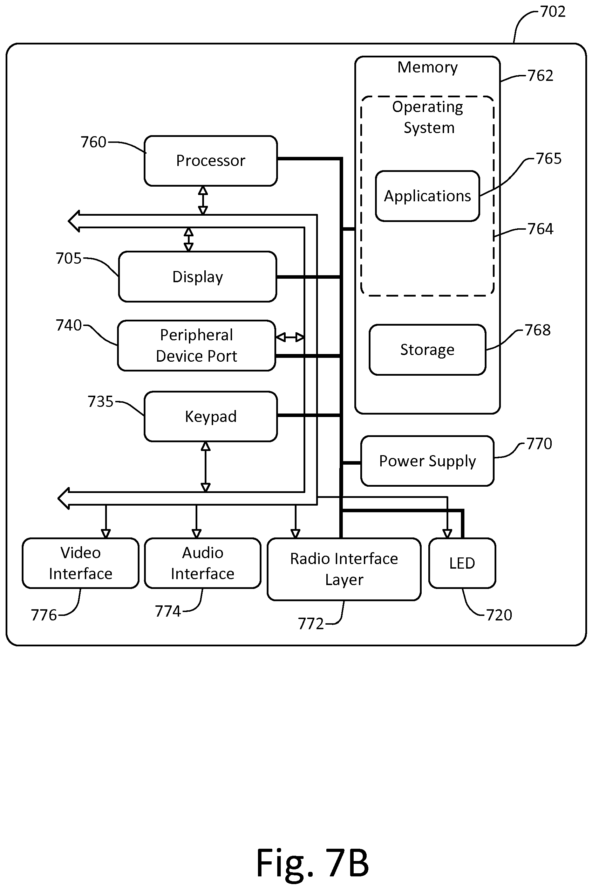

Figure 7B is a block diagram illustrating an architecture for a mobile computing device with which aspects of the invention may be practiced. As an example, the mobile computing device **700** may be implemented in a system **702** such as a smart phone capable of running one or more applications (e.g., browsers, e-mail clients, notes, contact managers, messaging clients, games, and media clients/players).

One or more application programs **765** may be loaded into the memory **762** and run on or in association with the operating system **764**. Examples of the application programs include phone dialer programs, e-mail programs, personal information management (PIM) programs, word processing programs, spreadsheet programs, Internet browser programs, messaging programs, and so forth. The system **702** also includes a non-volatile storage area **768** within the memory **762**. The non-volatile storage area **768** may be used to store persistent information that should not be lost if the system **702** is powered down. The application programs **765** may use and store information in the non-volatile storage area **768**, such as e-mail or other messages used by an e-mail application, and the like. A synchronization application (not shown) also resides on the system **702** and is programmed to interact with a corresponding synchronization application resident on a host computer to keep the information stored in the non-volatile storage area **768** synchronized with corresponding information stored at the host computer. As should be appreciated, other applications may be loaded into the memory **762** and run on the mobile computing device **700**, including software implementing aspects of the invention described herein.

The system **702** has a power supply **770**, which may be implemented as one or more batteries. The power supply **770** might further include an external power source, such as an AC adapter or a powered docking cradle that supplements or recharges the batteries.

The system **702** may also include a radio **772** that performs the function of transmitting and receiving radio frequency communications. The radio **772** facilitates wireless connectivity between the system **702** and the outside world via a communications carrier or service provider. Transmissions to and from the radio **772** are conducted under control of the operating system **764**. In other words, communications received by the radio **772** may be disseminated to the application programs **765** via the operating system **764**, and vice versa.

The visual indicator **720** may be used to provide visual notifications, and/or an audio interface **774** may be used for producing audible notifications via the audio transducer **725**. As shown, the visual indicator **720** may be a light emitting diode (LED). These devices may be directly coupled to the power supply **770** so that when activated, they remain on for a duration dictated by the notification mechanism even though the processor **760** and other components might shut down for conserving battery power. The LED may be programmed to remain on indefinitely until the user takes action to indicate the powered-on status of the device. The audio interface **774** is used to provide audible signals to and receive audible signals from the user. For example, in addition to being coupled to the audio transducer **725**, the audio interface **774** may also be coupled to a microphone to receive audible input, such as to facilitate a telephone conversation. The microphone may also serve as an audio sensor to facilitate control of notifications, as will be described below. The system **702** may further include a video interface **776** that enables an operation of an on-board camera **730** to record still images, video stream, and the like.

A mobile computing device **700** implementing the system **702** may have additional features or functionality. For example, the mobile computing device **700** may also include additional data storage devices (removable and/or non-removable) such as, magnetic disks, optical disks, or tape. Such additional storage is illustrated by the non-volatile storage area **768**. A peripheral port **740** allows external devices to be connected to the mobile computing device **700**. External devices may provide additional features or functionality to the mobile computing device **700** and/or allow data to be transferred to or from the mobile computing device **700**.

Data/information generated or captured by the mobile computing device **700** and stored via the system **702** may be stored locally on the mobile computing device **700**, as described above, or the data may be stored on any number of storage media that may be accessed by the device via the radio **772** or via a wired connection between the mobile computing device **700** and a separate computing device associated with the mobile computing device **700**, for example, a server computer in a distributed computing network, such as the Internet. As should be appreciated such data/information may be accessed via the mobile computing device **700** via the radio **772** or via a distributed computing network. Similarly, such data/information may be readily transferred between computing devices for storage and use according to well-known data/information transfer and storage means, including electronic mail and collaborative data/information sharing systems.

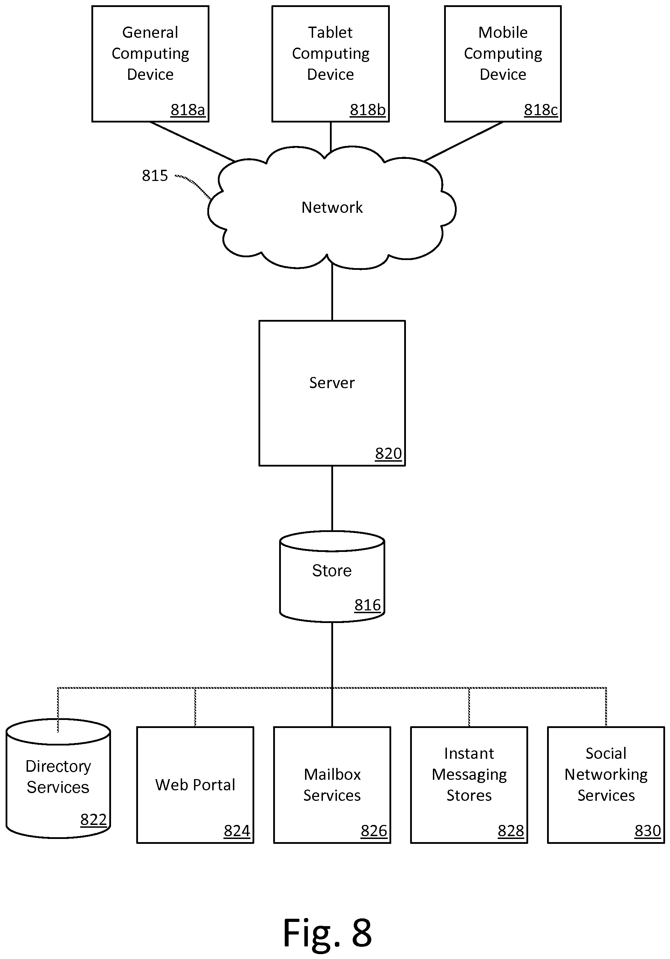

Figure 8 is a simplified block diagram of a distributed computing system for practicing aspects of the invention. Content developed, interacted with, or edited in association with software applications, including software implementing aspects of the invention described herein, may be stored in different communication channels or other storage types. For example, various documents may be stored using a directory service **822**, a web portal **824**, a mailbox service **826**, an instant messaging store **828**, or a social networking site **830**. The software applications may use any of these types of systems or the like for enabling data utilization, as described herein. A server **820** may provide the software applications to clients. As one example, the server **820** may be a web server providing the software applications over the web. The server **820** may provide the software applications over the web to clients through a network **815**. By way of example, the client device may be implemented as the computing device **600** and embodied in a personal computer **818a,** a tablet computer **818b,** and/or a mobile computing device (e.g., a smart phone) **818c.** Any of these client devices may obtain content from the store **816**.

The description and illustration of one or more embodiments provided in this application are intended to provide a complete thorough and complete disclosure the full scope of the subject matter to those skilled in the art and not intended to limit or restrict the scope of the invention as claimed in any way. The aspects, embodiments, examples, and details provided in this application are considered sufficient to convey possession and enable those skilled in the art to practice the best mode of claimed invention. Descriptions of structures, resources, operations, and acts considered well-known to those skilled in the art may be brief or omitted to avoid obscuring lesser known or unique aspects of the subject matter of this application. The claimed invention should not be construed as being limited to any embodiment, example, or detail provided in this application unless expressly stated herein. Regardless of whether shown or described collectively or separately, the various features (both structural and methodological) are intended to be selectively included or omitted to produce an embodiment with a particular set of features. Further, any or all of the functions and acts shown or described may be performed in any order or concurrently. Having been provided with the description and illustration of the present application, one skilled in the art may envision variations, modifications, and alternatives falling within broader aspects of the general inventive concept embodied in this application that do not depart from the broader scope of the claimed invention.

## Claims

1. A method of classifying an out-of-domain utterance as a web search query or an orphan of a targeted language understanding dialog system, wherein an orphan is an out-of-domain utterance that expresses a specific intent to have the targeted language understanding dialog system take a certain action, the method comprising:
receiving an out-of-domain utterance rejected by a domain classifier of the targeted language system;
evaluating the out-of-domain utterance for one or more semantic, syntactic, part-of-speech tag, or lexical features determinative of whether the out-of-domain utterance is a web search query or an orphan of the targeted language understanding dialog system;
determining that the out-of-domain utterance is an orphan by:
checking the evaluated out-of-domain utterance for the existence of a semantic feature, wherein the semantic feature is a predicate and an argument; and
classifying the out-of-domain utterance as an orphan when the predicate and the argument exist;generating, when the out-of-domain utterance is determined to be an orphan, a response indicating that the out-of-domain utterance is understood as a request to perform the certain action addressed to the targeted language understanding dialog system.

2. The method of claim 1 further comprising the acts of:
receiving an utterance supplied as an input to the targeted language understanding dialog system; and
determining that the utterance is an out-of-domain utterance not covered by a task domain associated with the targeted language understanding dialog system.

3. The method of claim 1 further comprising the acts of:
generating, when the out-of-domain utterance is determined to be an orphan, a message reporting that the out-of-domain utterance is understood as a request to perform a machine action addressed to the targeted language understanding dialog system; and
rendering the message to an output device associated with the targeted language understanding dialog system.

4. The method of claim 1 wherein the act of determining that the out-of-domain utterance is an orphan further comprises the act of classifying the out-of-domain utterance as an orphan using an orphan classifier based on features of the out-of-domain utterance supplied as inputs to the orphan classifier.

5. The method of claim 1 further comprising the act of extracting features from the utterance prior to determining that the out-of-domain utterance is an orphan.

6. The method of claim 1 further comprising the acts of:
semantically clustering a plurality of orphans; and
identifying a semantic cluster containing a selected measure of orphans that indicates users frequently make requests relating to an unsupported task domain.

7. A targeted language understanding dialog system having at least one domain, the targeted language understanding dialog system comprising:
a feature extractor operable to extract features from an utterance;
a classifier operable to receive the features as inputs, determine whether the utterance is an out-of-domain utterance not belonging to any domain associated with the classifier;
an orphan detector operable to receive the out-of-domain utterance and determine whether the out-of-domain utterance is an orphan, wherein an orphan is an out-of-domain utterance that expresses a specific intent to have the targeted language understanding dialog system take a certain action, the orphan detector further comprising:a semantic parser operable to semantically parse the out-of-domain utterance by checking the evaluated out-of-domain utterance for the existence of a semantic feature, wherein the semantic feature is a predicate and an argument; and
a classifier operable to classify the out-of-domain utterance as an orphan when the predicate and the argument exists; and
an interaction manager operable to process the orphan without sending the orphan to a general web search, the interaction manager further operable to:
generate, when the out-of-domain utterance is determined to be an orphan, a response indicating that the out-of-domain utterance is understood as a request to perform a certain action addressed to the targeted language understanding dialog system.

8. The targeted language understanding dialog system of claim 8 wherein the interaction manager is further operable to:
generate, when the out-of-domain utterance is determined to be an orphan, an output indicating that the orphan is understood as not being a web search query but is not supported by the targeted language understanding dialog system .

9. The targeted language understanding dialog system of claim 7 wherein the orphan detector comprises a discriminative classifier operable to apply a classification model using a feature associated with the out-of-domain utterance obtained using an output of the semantic parser to determine if the out-of-domain utterance is an orphan.

10. The targeted language understanding dialog system of claim 7 wherein the orphan detector further comprises at least one of a syntactic parser, a part-of-speech tagger, and a lexical parser.

11. The targeted language understanding dialog system of claim 7 wherein the orphan detector comprises a discriminative classifier operable to apply a semantic classification model.

12. The targeted language understanding dialog system of claim 7 further comprising:
an input device operable to collect utterances from a user; and
an input decoder in communication with the input device, the input decoder operable to receive and convert the utterances that are not text into text processable by a machine; and
an output device for rendering a result indicating the orphan specifies an intent that does not have a corresponding dialog act known to the interaction manager.

13. The targeted language understanding dialog system of claim 7 wherein the targeted language understanding dialog system is a production system contemporaneously responding to utterances from users, the interaction manager further operable to generate an output notifying the user that the intent cannot be performed.

14. A computer readable medium containing computer executable instructions which, when executed by a computer, cause the computer to perform a method as claimed in any one of claims 1 to 6.

## Patentansprüche

1. Verfahren zur Klassifizierung einer außerhalb-des-Bereichs-Äußerung als eine Web-Suchanfrage oder eine Waise eines zielgerichteten Sprachverständnisdialogsystems, wobei eine Waise eine außerhalb-des-Bereichs-Äußerung ist, die eine spezifische Absicht ausdrückt, das zielgerichtete Sprachverständnisdialogsystem eine bestimmte Handlung vornehmen zu lassen, wobei das Verfahren umfasst:
Empfangen einer von einem Bereichsklassifizierer des zielgerichteten Sprachsystems zurückgewiesenen außerhalb-des-Bereichs-Äußerung;
Beurteilen der außerhalb-des-Bereichs-Äußerung nach einem oder mehreren semantischen, syntaktischen, Wortart-Tag- oder lexikalischen Merkmalen, die ausschlaggebend dafür sind, ob die außerhalb-des-Bereichs-Äußerung eine Web-Suchanfrage oder eine Waise des zielgerichteten Sprachverständnisdialogsystems ist;
Bestimmen, dass die außerhalb-des-Bereichs-Äußerung eine Waise ist, durch:
Prüfen der beurteilten außerhalb-des-Bereichs-Äußerung auf das Vorkommen eines semantischen Merkmals, wobei das semantische Merkmal ein Prädikat und ein Argument ist, und
Klassifizieren der außerhalb-des-Bereichs-Äußerung als eine Waise, wenn das Prädikat und das Argument vorkommen; Generieren, wenn bestimmt wird, dass die außerhalb-des-Bereichs-Äußerung eine Waise ist, einer Antwort, die angibt, dass die außerhalb-des-Bereichs-Äußerung als eine Anfrage zum Durchführen der bestimmten Handlung verstanden wird, die an das zielgerichtete Sprachverständnisdialogsystem gerichtet ist.

2. Verfahren nach Anspruch 1, weiter umfassend die Handlungen von:
Empfangen einer Äußerung, die als eine Eingabe an das zielgerichtete Sprachverständnisdialogsystem bereitgestellt wird; und
Bestimmen, dass die Äußerung eine außerhalb-des-Bereichs-Äußerung ist, die nicht durch einen mit dem zielgerichteten Sprachverständnisdialogsystem verbundenen Aufgabenbereich abgedeckt ist.

3. Verfahren nach Anspruch 1 weiter umfassend die Handlungen von:
Generieren, wenn bestimmt wird, dass die außerhalb-des-Bereichs-Äußerung eine Waise ist, einer Nachricht, die berichtet, dass die außerhalb-des-Bereichs-Äußerung als eine Anfrage zum Durchführen einer Maschinenhandlung verstanden wird, die an das zielgerichtete Sprachverständnisdialogsystem gerichtet ist; und
Übergeben der Nachricht an eine Ausgabevorrichtung, die mit dem zielgerichteten Sprachverständnisdialogsystem verbunden ist.

4. Verfahren nach Anspruch 1, wobei die Handlung des Bestimmens, dass die außerhalb-des-Bereichs-Äußerung eine Waise ist, weiter umfasst die Handlung des Klassifizierens der außerhalb-des-Bereichs-Äußerung als eine Waise unter Verwendung eines Waisen-Klassifizierers basierend auf Merkmalen der außerhalb-des-Bereichs-Äußerung, die als Eingaben an den Waisen-Klassifizierer bereitgestellt werden.

5. Verfahren nach Anspruch 1, weiter umfassend die Handlung des Extrahierens von Merkmalen aus der Äußerung vor dem Bestimmen, dass die außerhalb-des-Bereichs-Äußerung eine Waise ist.

6. Verfahren nach Anspruch 1, weiter umfassend die Handlungen von:
semantisch Clustern einer Vielzahl von Waisen; und
Identifizieren eines semantischen Clusters, das ein ausgewähltes Maß von Waisen aufweist, das angibt, dass Benutzer häufig Anfragen machen, die einen nicht unterstützen Aufgabenbereich betreffen.

7. Zielgerichtetes Sprachverständnisdialogsystem mit wenigstens einem Bereich, wobei das zielgerichtete Sprachverständnisdialogsystem umfasst:
einen Merkmalsextrahierer, der betriebsbereit ist zum Extrahieren von Merkmalen aus einer Äußerung;
einen Klassifizierer, der betriebsbereit ist zum Empfangen der Merkmale als Eingaben, Bestimmen, ob die Äußerung eine außerhalb-des-Bereichs-Äußerung ist, die nicht zu einem Bereich gehört, der mit dem Klassifizierer verbunden ist;
einen Waisen-Detektor, der betriebsbereit ist zum Empfangen der außerhalb-des-Bereichs-Äußerung und Bestimmen, ob die außerhalb-des-Bereichs-Äußerung eine Waise ist, wobei eine Waise eine außerhalb-des-Bereichs-Äußerung ist, die eine spezifische Absicht ausdrückt, das zielgerichtete Sprachverständnisdialogsystem eine bestimmte Handlung vornehmen zu lassen, wobei der Waisen-Detektor weiter umfasst: einen semantischen Parser, der betriebsbereit ist zum semantischen Parsen der außerhalb-des-Bereichs-Äußerung durch Prüfen der beurteilten außerhalb-des-Bereichs-Äußerung auf das Vorkommen eines semantischen Merkmals, wobei das semantische Merkmal ein Prädikat und ein Argument ist; und
einen Klassifizierer, der betriebsbereit ist zum Klassifizieren der außerhalb-des-Bereichs-Äußerung als eine Waise, wenn das Prädikat und das Argument vorkommt; und
einen Interaktionsmanager, der betriebsbereit ist zum Verarbeiten der Waisen ohne die Waise an eine allgemeine Websuche zu senden, wobei der Interaktionsmanager weiter betriebsbereit ist zum:
Generieren, wenn bestimmt wird, dass die außerhalb-des-Bereichs-Äußerung eine Waise ist, einer Antwort, die angibt, dass die außerhalb-des-Bereichs-Äußerung als eine Anfrage zum Durchführen einer bestimmten Handlung verstanden wird, die an das zielgerichtete Sprachverständnisdialogsystem gerichtet ist.

8. Zielgerichtetes Sprachverständnisdialogsystem nach Anspruch 8, wobei der Interaktionsmanager weiter betriebsbereit ist zum:
Generieren, wenn bestimmt wird, dass die außerhalb-des-Bereichs-Äußerung eine Waise ist, einer Ausgabe, die angibt, dass die Waise nicht als eine Web-Suchanfrage verstanden wird, sondern nicht durch das zielgerichtete Sprachverständnisdialogsystem unterstützt wird.

9. Zielgerichtetes Sprachverständnisdialogsystem nach Anspruch 7, wobei der Waisen-Detektor einen unterschiedlichen Klassifizierer umfasst, der betriebsbereit ist zum Anwenden eines Klassifizierungsmodells unter Verwendung eines mit der außerhalb-des-Bereichs-Äußerung verbundenen Merkmals, das unter Verwendung einer Ausgabe des semantischen Parsers erhalten wird, um zu bestimmen, ob die außerhalb-des-Bereichs-Äußerung eine Waise ist.

10. Zielgerichtetes Sprachverständnisdialogsystem nach Anspruch 7, wobei der Waisen-Detektor weiter wenigstens einen von einem syntaktischen Parser, einem Wortart-Tagger und einem lexikalischen Parser umfasst.

11. Zielgerichtetes Sprachverständnisdialogsystem nach Anspruch 7, wobei der Waisen-Detektor einen unterschiedlichen Klassifizierer umfasst, der betriebsbereit ist zum Anwenden eines semantischen Klassifizierungsmodells.

12. Zielgerichtetes Sprachverständnisdialogsystem nach Anspruch 7, weiter umfassend:
eine Eingabevorrichtung, die betriebsbereit ist zum Sammeln von Äußerungen von einem Benutzer; und
einen Eingabe-Dekodierer in Kommunikation mit der Eingabevorrichtung, wobei der Eingabe-Dekodierer betriebsbereit ist zum Empfangen und Umwandeln der Äußerungen, die kein Text sind, in Text, der von einer Maschine verarbeitet werden kann; und
eine Ausgabevorrichtung zum Übergeben eines Ergebnisses, das angibt, dass die Waise eine Absicht spezifiziert, die keine korrespondierende Dialoghandlung hat, die dem Interaktionsmanager bekannt ist.

13. Zielgerichtetes Sprachverständnisdialogsystem nach Anspruch 7, wobei das zielgerichtete Sprachverständnisdialogsystem ein Produktionssystem ist, das gleichzeitig auf Äußerungen von Benutzern antwortet, wobei der Interaktionsmanager weiter betriebsbereit ist zum Generieren einer Ausgabe, die den Benutzer benachrichtigt, dass die Absicht nicht erfüllt werden kann.

14. Computerlesbares Medium, das computerausführbare Instruktionen aufweist, die, wenn sie durch einen Computer ausgeführt werden, bewirken, dass der Computer ein Verfahren nach einem der Ansprüche 1 bis 6 durchführt.

## Revendications

1. Procédé de classification d'un énoncé hors domaine en tant qu'interrogation de recherche Web ou qu'orphelin d'un système de dialogue ciblé avec compréhension de langage, dans lequel un orphelin est un énoncé hors domaine qui exprime une intention spécifique afin que le système de dialogue ciblé avec compréhension de langage fasse une certaine action, le procédé comprenant :
la réception d'un énoncé hors domaine rejeté par un classificateur de domaine du système de langage ciblé ;
l'évaluation de l'énoncé hors domaine pour une ou plusieurs caractéristiques sémantiques, syntaxiques, d'étiquettes morpho-syntaxiques, ou de caractéristiques lexicales déterminant si l'énoncé hors domaine est une interrogation de recherche Web ou un orphelin du système de dialogue ciblé avec compréhension de langage ;
le fait de déterminer que l'énoncé hors domaine est un orphelin par :
la vérification de l'énoncé hors domaine évalué quant à l'existence d'une caractéristique sémantique, dans lequel la caractéristique sémantique est un prédicat et un argument ; et
la classification de l'énoncé hors domaine en tant qu'orphelin lorsque le prédicat et l'argument existent ; la génération, lorsqu'il est déterminé que l'énoncé hors domaine est un orphelin, d'une réponse indiquant que l'énoncé hors domaine est compris en tant que demande de réaliser la certaine action adressée au système de dialogue ciblé avec compréhension de langage.

2. Procédé selon la revendication 1, comprenant en outre les actes consistant à :
recevoir un énoncé fourni en tant qu'entrée au système de dialogue ciblé avec compréhension de langage ; et
déterminer que l'énoncé est un énoncé hors domaine non couvert par un domaine de tâches associé au système de dialogue ciblé avec compréhension de langage.

3. Procédé selon la revendication 1, comprenant en outre les actes consistant à :
générer, lorsqu'il est déterminé que l'énoncé hors domaine est un orphelin, un message rapportant que l'énoncé hors domaine est compris en tant que demande pour réaliser une action par une machine adressée au système de dialogue ciblé avec compréhension de langage ; et
rendre le message vers un dispositif de sortie associé au système de dialogue ciblé avec compréhension de langage.

4. Procédé selon la revendication 1, dans lequel l'acte consistant à déterminer que l'énoncé hors domaine est un orphelin comprend en outre l'acte consistant à classifier l'énoncé hors domaine en tant qu'orphelin en utilisant un classificateur d'orphelin sur la base de caractéristiques de l'énoncé hors domaine fournies en tant qu'entrées au classificateur d'orphelin.

5. Procédé selon la revendication 1, comprenant en outre l'acte consistant à extraire des caractéristiques de l'énoncé avant de déterminer que l'énoncé hors domaine est un orphelin.

6. Procédé selon la revendication 1, comprenant en outre les actes consistant à :
regrouper de manière sémantique une pluralité d'orphelins ; et
identifier un groupe sémantique contenant une mesure sélectionnée d'orphelins qui indique que des utilisateurs font fréquemment des demandes relatives à un domaine de tâches non pris en charge.

7. Système de dialogue ciblé avec compréhension de langage ayant au moins un domaine, le système de dialogue ciblé avec compréhension de langage comprenant :
un extracteur de caractéristiques fonctionnel pour extraire des caractéristiques d'un énoncé ;
un classificateur fonctionnel pour recevoir les caractéristiques en tant qu'entrées, déterminer si l'énoncé est un énoncé hors domaine n'appartenant pas à un quelconque domaine associé au classificateur ;
un détecteur d'orphelin fonctionnel pour recevoir l'énoncé hors domaine et déterminer si l'énoncé hors domaine est un orphelin, dans lequel un orphelin est un énoncé hors domaine qui exprime une intention spécifique afin que le système de dialogue ciblé avec compréhension de langage fasse une certaine action, le détecteur d'orphelin comprenant en outre : un analyseur sémantique fonctionnel pour analyser de manière sémantique l'énoncé hors domaine par vérification de l'énoncé hors domaine évalué quant à l'existence d'une caractéristique sémantique, dans lequel la caractéristique sémantique est un prédicat et un argument ; et
un classificateur fonctionnel pour classifier l'énoncé hors domaine en tant qu'orphelin lorsque le prédicat et l'argument existent ; et
un gestionnaire d'interactions fonctionnel pour traiter l'orphelin sans envoyer l'orphelin vers une recherche Web générale, le gestionnaire d'interaction fonctionnel en outre pour :
générer, lorsqu'il est déterminé que l'énoncé hors domaine est un orphelin, une réponse indiquant que l'énoncé hors domaine est compris en tant que demande pour réaliser une certaine action adressée au système de dialogue ciblé avec compréhension de langage.

8. Système de dialogue ciblé avec compréhension de langage selon la revendication 8, dans lequel le gestionnaire d'interaction est en outre fonctionnel pour :
générer, lorsqu'il est déterminé que l'énoncé hors domaine est un orphelin, une sortie indiquant que l'orphelin est compris comme n'étant pas une interrogation de recherche Web, mais il n'est pas pris en charge par le système de dialogue ciblé avec compréhension de langage.

9. Système de dialogue ciblé avec compréhension de langage selon la revendication 7, dans lequel le détecteur d'orphelin comprend un classificateur discriminatif fonctionnel pour appliquer un modèle de classification en utilisant une caractéristique associée à l'énoncé hors domaine obtenue en utilisant une sortie de l'analyseur sémantique pour déterminer si l'énoncé hors domaine est un orphelin.

10. Système de dialogue ciblé avec compréhension de langage selon la revendication 7, dans lequel le détecteur d'orphelin comprend en outre au moins un parmi un analyseur syntaxique, un étiqueteur morpho-syntaxique et un analyseur lexical.

11. Système de dialogue ciblé avec compréhension de langage selon la revendication 7, dans lequel le détecteur d'orphelin comprend un classificateur discriminatif fonctionnel pour appliquer un modèle de classification sémantique.

12. Système de dialogue ciblé avec compréhension de langage selon la revendication 7, comprenant en outre :
un dispositif d'entrée fonctionnel pour collecter des énoncés en provenance d'un utilisateur ; et
un décodeur d'entrée en communication avec le dispositif d'entrée, le décodeur d'entrée fonctionnel pour recevoir et convertir les énoncés, qui ne sont pas un texte, en un texte pouvant être traité par une machine ; et
un dispositif de sortie pour rendre un résultat indiquant que l'orphelin spécifie une intention qui n'a pas un acte de dialogue correspondant connu du gestionnaire d'interaction.

13. Système de dialogue ciblé avec compréhension de langage selon la revendication 7, dans lequel le système de dialogue ciblé avec compréhension de langage est un système de production répondant simultanément à des énoncés provenant d'utilisateurs, le gestionnaire d'interaction étant en outre fonctionnel pour générer une sortie notifiant à l'utilisateur que l'intention ne peut pas être réalisée.

14. Support lisible par ordinateur contenant des instructions exécutables par ordinateur qui, lorsqu'elles sont exécutées par un ordinateur, amènent l'ordinateur à réaliser un procédé selon l'une quelconque des revendications 1 à 6.
